# EUROPÄISCHE PATENTSCHRIFT

(11) **EP 0 603 703 B1**
(45) Veröffentlichungstag und Bekanntmachung des Hinweises auf die Patenterteilung: **27.09.1995**
(21) Anmeldenummer: 93120073.7
(22) Anmeldetag: 13.12.1993
(51) Int. Cl.: G02B 25/02, G02B 27/02

(54) **Lesegerät**
Reading device
Appareil de lecture

(30) Priorität: 22.12.1992 DE 9217484 U
(43) Veröffentlichungstag der Anmeldung: 29.06.1994
(73) Patentinhaber: ESCHENBACH OPTIK GmbH + Co., 90409 Nürnberg (DE)
(72) Erfinder: Henkelmann, Klaus, D-90552 Röthenbach (DE)
(74) Vertreter: Tergau, Enno, Dipl.-Ing.

(56) Entgegenhaltungen:
- EP-A- 0 277 024
- DE-A- 2 846 072
- DE-U- 8 807 303
- DE-U- 9 000 190
- US-A- 3 945 717
- US-A- 4 859 032

## Beschreibung

Die Erfindung betrifft ein Lesegerät mit den im Oberbegriff des Anspruches 1 genannten Merkmalen.

Ein Lesegerät der genannten Art ist beispielsweise aus dem DE-Gebrauchsmuster 8807303.3 bekannt. Es enthält eine von einem auf das Lesegut aufsetzbaren Ständer getragene Leselinse und eine von dem Ständer gehaltene und dem Lesegut direkt aufliegende stabförmige Plankonvexlinse zur Hervorhebung oder Markierung einer Zeile des Leseguts. Die Plankonvexlinse ist parallel zur Zeilenrichtung angeordnet und weist auf ihrer dem Lesegut Zugewandten Planseite zusätzlich eine ebenfalls parallel zur Zeilenrichtung angeordnete Orientierungslinie auf. Die bekannten Lesegeräte haben den Nachteil, daß das Lesegut im Bereich der stabförmigen Linse stärker vergrößert ist als im restlichen Sehfeld der Leselinse. Insbesondere wirken sich die am Rand der stabförmigen Linse auftretenden optischen Verzerrungen störend aus.

Davon ausgehend ist es die Aufgabe der Erfindung, ein Lesegerät vorzusehen bei dem die genannten Nachteile nicht auftreten, bei dem also eine einheitliche Vergrößerung vorliegt und wenigstens eine Zeile deutlich und auch für Personen mit sehr schwachem Augenlicht erkennbar hervorgehoben ist.

Diese Aufgabe wird durch das kennzeichnende Merkmal des Anspruches 1 gelöst. Danach ist die Markierung ein auf dem Lesegut erzeugter Leuchtbalken. Der von der Leselinse des Lesegeräts erzeugte vergrößerte Ausschnitt des Leseguts weist im Gegensatz zu dem bekannten Lesegerät eine einheitliche Vergrößerung auf. Ein weiterer Vorteil der Erfindung liegt darin, daß durch Veränderung der Lichtintensität des Leuchtbalkens eine individuelle Anpassung des Kontrastes zwischen Leuchtbalken und restlichem Sehfeld möglich ist.

Vorteilhafte Ausgestaltungen des erfindungsgemäßen Lesegeräts sind in den Ansprüchen 2-22 angegeben. Durch den ringsum geschlossenen, die Leselinse tragenden Hüllmantel des Lesegeräts ist der von der Leselinse vergrößerte Ausschnitt des Leseguts einerseits von störenden seitlichen Lichteinstreuungen abgeschirmt und wird andererseits die Beleuchtung des Leseguts erleichtert.

Durch die Maßnahme gemäß Anspruch 5 ist es möglich, die Leselinse aus ihrer Grundstellung, bei der ihre Planebene parallel zum Lesegut verläuft, in eine zum Benutzer hinweisende Schrägstellung zu verschwenken. Der Benutzer muß sich daher nicht über das Lesegerät beugen, sondern kann es von einer normalen Sitzposition aus benutzen.

Die Maßnahmen gemäß Anspruch 7 und 8 gewährleisten, daß von der Glühlampe praktisch keine blendenden Lichtstrahlen direkt ins Auge des Betrachters gelangen können.

In Anspruch 10 ist eine vorteilhafte Möglichkeit zur Erzeugung eines Leuchtbalkens auf dem Lesegut angegeben. Die von der Glühlampe ausgesandten Lichtstrahlen werden durch eine Sammellinse gebündelt und durch einen Umlenkspiegel auf das Lesegut reflektiert. Die biasphärische Sammellinse nach Anspruch 11 hat den Vorteil, daß sie gegenüber einer sphärischen Sammellinse ein größeres Öffnungsverhältnis hat. Ihre Lichtausbeute ist entsprechend gesteigert. Durch die in Anspruch 12 genannte Anordnung der Glühlampe wird erreicht, daß das von ihr ausgehende Licht von der Sammellinse zu einem nahezu parallelen Lichtbündel umgeformt wird. Außerdem wird erreicht, daß der Glühfaden bzw. die Glühwendel der Glühlampe selbst nicht auf dem Lesegut abgebildet wird. Da aufgrund von Fertigungstoleranzen oder unterschiedlichen Glühlampen-Fabrikaten die Glühwendel an unterschiedlichen Stellen angeordnet sein kann, ist es zweckmäßig, wenn der Abstand zwischen Linse und Glühlampe variierbar ist, um eine Positionierung der Glühwendel im Brennpunkt der Linse vorzunehmen.

In Anspruch 14 ist eine zweckmäßige Möglichkeit zur Erzeugung eines Lichtbalkens angegeben. Das von der Sammellinse ausgehende parallele Strahlenbündel trifft auf einen streifenförmig ausgebildeten Umlenkspiegel. Dadurch wird ein der Spiegelfläche entsprechendes Flächensegment aus dem auftreffenden Strahlenbündel quasi ausgeschnitten und auf das Lesegut reflektiert. In der Beschreibung sind weitere vorteilhafte Ausgestaltungen der Spiegelfläche angegeben. Beispielsweise kann sie in Richtung auf die Glühlampe konvex vorgewölbt sein, um damit eine Verlängerung des auf dem Lesegut erzeugten Lichtbalkens zu bewirken. Ebenso kann die Breite der Spiegelfläche kontinuierlich verringert sein, um die mit dem Abstand vom Umlenkspiegel zunehmende Aufweitung bzw. Verbreiterung des Leuchtbalkens zu kompensieren. Eine weitere Möglichkeit zur Erzeugung eines Leuchtbalkens ist in Anspruch 15 angegeben. Danach ist vor oder hinter der Sammellinse eine Blende mit einer schlitzförmigen Durchtrittsöffnung angeordnet. Das austretende, im Querschnitt etwa rechteckige Strahlenbündel wird von dem Umlenkspiegel auf das Lesegut unter Abbildung eines Leuchtbalkens reflektiert. Der Umlenkspiegel muß in diesem Fall nicht der Form bzw. der Breite des Leuchtbalkens angepaßt sein. Auch in diesem Fall ist es möglich, etwa durch eine entsprechende Krümmung der Spiegelfläche, der Aufweitung des Leuchtbalkens entgegenzuwirken.

Bei der Ausführungsform gemäß Anspruch 16 wird das von der Glühlampe erzeugte Licht durch ein optisches Element, beispielsweise eine Linse oder ein Prisma, direkt auf das Lesegut abgelenkt. Ein Umlenkspiegel ist bei dieser Ausführungsform daher nicht notwendig. Die Ablenkung kann zweckmäßigerweise durch eine Schräglage der Sammellinse erreicht werden. Die optische Achse der Linse bildet dann mit der Planebene des Leseguts einen zur Glühlampe hin offenen spitzen Winkel. Das von der Glühlampe erzeugte Licht wird somit in ein auf das Lesegut gerichtetes paralleles Strahlenbündel umgewandelt. Zur Erzeugung des Leuchtbalkens wird eine Linse mit 2 parallel zueinander und zur optischen Achse der Linse verlaufenden Seitenfläche verwendet. In Blickrichtung ihrer optischen Achse hat die Linse bzw. das Linsensegment eine rechteckige Umrißform. Der Leuchtbalken kann aber auch wie bereits oben beschrieben, durch eine vor der Linse bzw. dem Prisma angeordnete Blende mit einer der Form des Leuchtbalkens entsprechenden Durchtrittsöffnung erzeugt werden.

Durch die Maßnahme gemäß Anspruch 20 wird die Ausleuchtung des Sehfeldes unterstützt. Die in Anspruch 21 angegebene Färbung der Linsen bzw. das Vor- bzw. Zwischenschalten von Farbfiltern ermöglicht eine individuelle Anpassung an Farb-Fehlsichtigkeiten.

In Anspruch 22 ist eine Ausführungsform angegeben, bei der der Leuchtbalken nur durch eine schlitzförmige Blende erzeugt wird. Be der Verwendung einer entsprechend leistungsstarken Glühbirne kann eine Sammellinse entfallen.

Die Erfindung wird anhand von in den beigefügten Zeichnungen dargestellten Ausführungsbeispielen näher erläutert. Es zeigen:
- Fig. 1: einen schematischen Querschnitt durch ein erfindungsgemäßes Lesegerät mit indirekter Leuchtbalken-Erzeugung mittels eines Umlenkspiegels,
- Fig. 2-5: perspektivische Ansichten von Umlenkspiegeln, gem. Fig.1,
- Fig. 6: die Draufsicht auf ein erfindungsgemäßes Lesegerät,
- Fig. 7: eine Ausführungsform eines erfindungsgemäßen Lesegerätes mit direkter Leuchtbalken-Erzeugung unter Verwendung einer schräggestellten Sammellinse in schematisierter Querschnittsdarstellung,
- Fig. 8: ein weiteres Ausführungsbeispiel mit direkter Leuchtbalkenerzeugung in schematisierter Querschnittsdarstellung
- Fig. 9: eine perspektivische Darstellung der Linse gemäß Fig. 8,
- Fig. 10: eine perspektivische Darstellung der Linse gemäß Fig. 9, in Kombination mit einer Mattscheibe.
- Fig. 11: ein weiteres Ausführungsbeispiel, bei dem der Leuchtbalken nur durch eine Schlitzblende erzeugt wird.

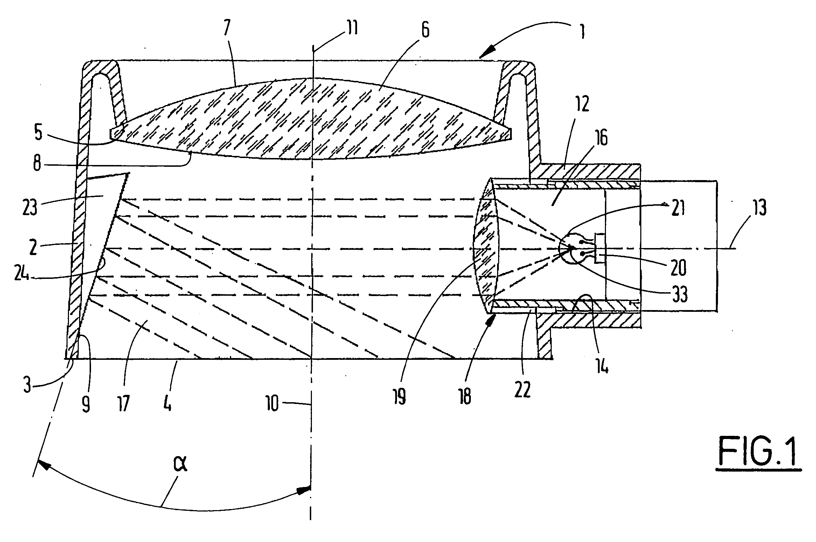

Wie in Fig. 1 dargestellt, enthält das als Ganzes mit 1 bezeichnete Lesegerät ein nach Art eines Hüllmantels ausgebildetes Gestell 2. Das untere Ende des Gestells 2 bildet eine Aufsetzkante 3 zum Aufstellen des Lesegeräts auf einem Lesegut 4, beispielsweise einer Buchseite. Das obere Ende des Gestells 2 ist im Querschnitt gesehen hakenförmig nach innen gebogen und trägt mit seiner auf das Lesegut 4 weisenden Kante 5 eine Leselinse 6. Die Leselinse 6 ist eine bikonvexe asphärische Sammellinse, deren dem Auge des Betrachters zugewandte Oberseite 7 stärker gekrümmt ist als die dem Lesegut 4 zugewandte Unterseite 8. Die optische Achse 10 der Leselinse 6 verläuft im Gebrauchszustand etwa rechtwinklig zur Planfläche des Leseguts 4. Sie verläuft außerdem koaxial bzw. parallel zur Mittellängsachse 11 des Gestells 2. Das Gestell muß jedoch nicht unbedingt ringsum geschlossen sein. Es kann auch seitliche Druchbrechungen haben oder etwa U-förmig ausgebildet sein, wobei die freien Enden der U-Schenkel auf dem Lesegut abgestützt sind.

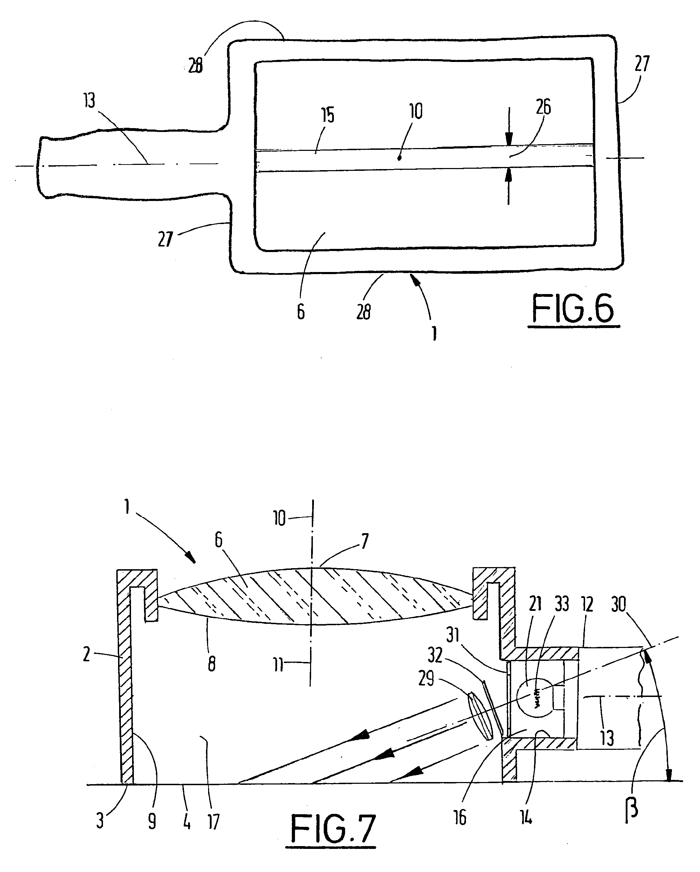

Seitlich am Gestell 2 ist ein Handgriff 12 befestigt oder angeformt, dessen Mittellängsachse 13 die optische Achse 10 der Leselinse 6 rechtwinklig schneidet und radial zu dieser verläuft. Der Handgriff 12 ist in Richtung der optischen Achse 10 zwischen Leselinse 6 und Lesegut 4 positioniert. Er ist im Querschnitt etwa kreisrund und weist einen ebensolchen Hohlraum 14 auf. In diesem Hohlraum ist ein Beleuchtungssystem zur Erzeugung eines Leuchtbalkens 15 (Fig.6) auf dem Lesegut 4 sowie zur Ausleuchtung des gesamten Sehfeldes untergebracht. Eine Batterie (nicht dargestellt) ist in dem von der optischen Achse 10 abgewandten Teil des Hohlraumes 14 angeordnet. Als Alternative zu einer Batterie ist natürlich auch eine Stromversorgung mit einem Netzgerät möglich. Der Hohlraum mündet über eine Öffnung 16 in den von dem Gestell 2 umschlossenen Innenraum 17 des Lesegeräts. In dem der optischen Achse 10 zugewandten Ende des Hohlraumes 14 liegt ein Bauteil 18 ein, das eine Sammellinse 19, eine Lampenfassung 20 und darin befestigt eine Glühlampe 21 enthält. Das Bauteil 18 ist im wesentlichen ein Rohrabschnitt, dessen dem Innenraum 17 abgewandtes Ende die Lampenfassung trägt und auf dessen anderem Ende ein die Sammellinse 19 tragender Tubus 22 verschieb- und abnehmbar aufgesteckt ist. Das gesamte Bauteil 18 liegt formschlüssig und herausnehmbar im Hohlraum 14 des Handgriffes 12 ein. Die Glühlampe 21 ist mit einem am Handgriff 12 angeordneten Schalter (nicht dargestellt) einschaltbar. Sie ist so positioniert, daß sich ihre Glühwendel 33 im Brennpunkt der Sammellinse 19 befindet. Ihr Licht wird daher von der Sammellinse 19 zu einem nahezu parallelen Strahlenbündel geformt. Die Beleuchtungsstärke der Glühlampe ist mit einem Trimmpotentiometer (nicht dargestellt) am Handgriff einstellbar.

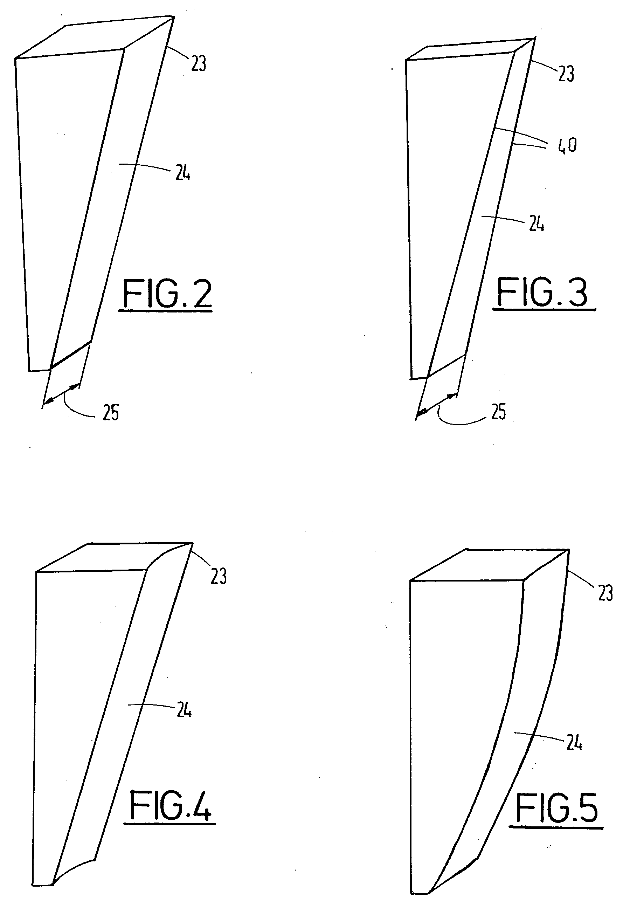

Auf der der Sammellinse 19 diametral gegenüberliegenden Innenseite des Gestells 2 ist ein Umlenkspiegel 23 angeordnet, der das von der Sammellinse 19 ausgehende Lichtbündel auf das Lesegut 4 unter Abbildung des Leuchtbalkens 15 (Fig.6) umlenkt. Die Spiegelfläche 24 ist zu diesem Zweck in Richtung auf das Lesegut geneigt. Sie bildet mit der optischen Achse 10 der Leselinse 6 einen zum Lesegut 4 hin offenen spitzen Winkel α. Die Breite 25 (Fig.2) der Spiegelfläche 24 entspricht etwa der Breite 26 (Fig. 6) des Leuchtbalkens 15. Die Sammellinse 19 ist eine biasphärische Linse.

In den Fig.2-5 sind verschiedene Ausführungsformen von Umlenkspiegeln 23 dargestellt. Der Umlenkspiegel nach Fig.2 hat eine ebene Spiegelfläche 24 mit rechteckiger Umrißform. Die Breite 25 der Spiegelfläche 24 entspricht dabei, wie oben bereits ausgeführt, der Breite 26 des Leuchtbalkens 15. Bei dem Umlenkspiegel 23 gemäß Fig.3 divergieren die Längsseiten 40 der Spiegelfläche 24 in Richtung auf das Lesegut 4. Die Breite 25 der Spiegelfläche 24 nimmt deshalb in Richtung auf das Lesegut kontinuierlich zu. Eine durch die Konvergenz der von der Spiegelfläche 24 reflektierten Lichtstrahlen hervorgerufene Verbreiterung des Leuchtbalkens 15 kann dadurch ausgeglichen werden. Der in Fig.4 dargestellte Umlenkspiegel weist eine in Breitenrichtung konkav gekrümmte Spiegelfläche 24 auf. Auf den Umlenkspiegel auftreffende Lichtstrahlen werden fokusiert und somit die Leuchtkraft des Leuchtbalkens 15 erhöht. Fig.5 schließlich zeigt einen Umlenkspiegel, dessen Spiegelfläche 24 in Längsrichtung konvex gekrümmt ist. Durch diese Ausgestaltung ist es möglich, im Falle von relativ breiten, einen größeren Bereich der Zeilenbreite des Leseguts überdeckenden Lesegeräten den Leuchtbalken 15 zu verlängern. Neben den genannten Formen von Umlenkspiegeln sind natürlich noch weitere Ausgestaltungen denkbar, etwa eine Kombination der Spiegelflächenformen gemäß Fig.3 und 4.

In Fig. 6 ist eine Ausführungsform eines Lesegeräts 1 dargestellt, dessen Gestell im Querschnitt rechteckig ist. Der Handgriff 12 ist an einer Schmalseite 27 des Gestells 2 angeformt derart, daß seine Mittellängsachse 13 radial zur optischen Achse 10 der Leselinse 6 und parallel zu den Längsseiten 28 des Gestells 2 verläuft. Der Leuchtbalken 15 verläuft im Gebrauchszustand parallel zur Mittellängsachse 13 des Handgriffs sowie zu den Längsseiten 28 des Gestells und schneidet die optische Achse 10 der Leselinse 6.

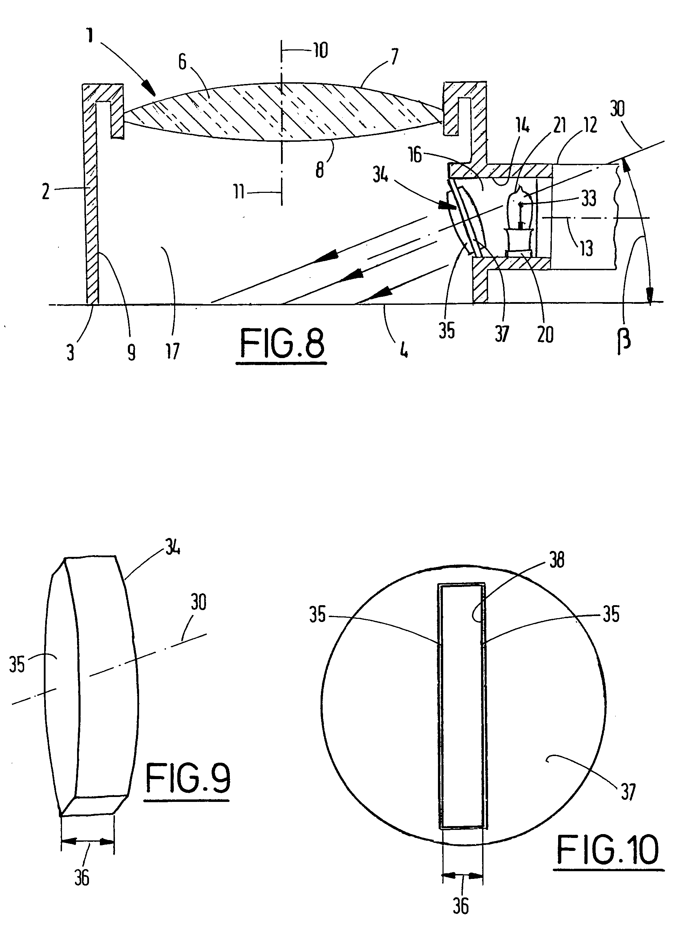

In Fig. 7 ist die Ausführungsform eines erfindungsgemäßen Lesegeräts dargestellt, bei der der Leuchtbalken direkt, also ohne Umlenkung über einen Spiegel, erzeugt wird. Die Sammellinse 29 ist hier so angeordnet, daß ihre optische Achse 30 mit der Planfläche des Leseguts 4 einen zur Glühlampe 21 hin offenen spitzen Winkel β bildet. Die Sammellinse 29 ist eine biaspärische Linse.

Zwischen der Glühlampe 21 und der Sammellinse 29 ist innerhalb des Hohlraumes 14 eine Blende 31 angeordnet. Die Blendenöffnung (nicht dargestellt) weist eine für die Erzeugung eines Leuchtbalkens 15 geeignete Umrißform auf. Die Blende 31 kann gegebenenfalls auch, abweichend von Fig.7, so angeordnet sein, daß ihre Planfläche rechtwinklig zur optischen Achse 30 der Linse 29 verläuft. Zwischen der Sammellinse 29 und der Blende 31 ist ein Farbfilter 32 angeordnet. Es kann jedoch auch zwischen Blende 31 und Glühlampe 21 positioniert sein. Zur Erzeugung eines Farbeffekts ist es jedoch auch denkbar, eine gefärbte Linse oder eine farbige Glühbirne zu verwenden. Die hier bechriebenen Möglichkeiten zur Erzeugung eines gefärbten Lichts sind ebenfalls auf die weiter oben beschriebene Ausführungsform anwendbar.

In Fig. 8 ist ein Ausführungsbeispiel dargestellt, bei dem die Form des auf dem Lesegut 4 erzeugten Leuchtbalkens 15 nicht durch eine Blende, sondern durch die Form der Sammellinse (Segment 34) erzeugt wird. Wie aus Fig.9 und 10 hervorgeht, weist die Linse zwei parallel zueinander und parallel zu ihrer optischen Achse 30 verlaufende Seitenflächen 35 auf. Die Linse entspricht somit etwa einem streifenförmigen Segment 34, das aus dem Scheitelbereich einer Sammellinse ausgeschnitten wurde. Der Abstand 36 der beiden Seitenflächen 35 entspricht etwa der Breite 26 des Leuchtbalkens 15. Wie bei dem Ausführungsbeispiel gemäß Fig.7 ist auch das Segment 34 so angeordnet, daß seine optische Achse 30 mit der Planfläche des Leseguts 4 einen zur Glühlampe 21 hin offenen spitzen Winkel β bildet. Das seitlich an den Seitenflächen 35 des Segments 34 vorbei aus dem Hohlraum 14 austretende Licht dient zur Ausleuchtung des gesamten Sehfelds. Um eine Blendwirkung durch die Glühlampe zu vermeiden bzw. zur Erzeugung eines diffusen Lichtes ist im Öffnungsrand der Öffnung 16 des Hohlraums 14 eine Mattscheibe 37 eingepaßt. Die Planfläche der Mattscheibe verläuft rechtwinklig zur optischen Achse 30 des Segments 34. Das Segment 34 schließlich liegt in einer zentralen, nach Art eines Rechteckschlitzes ausgeformten Öffnung 38 der Mattscheibe 37 ein und ist dort fixiert. Die Seitenflächen 35 verlaufen rechtwinklig zur Planebene der Mattscheibe 37.

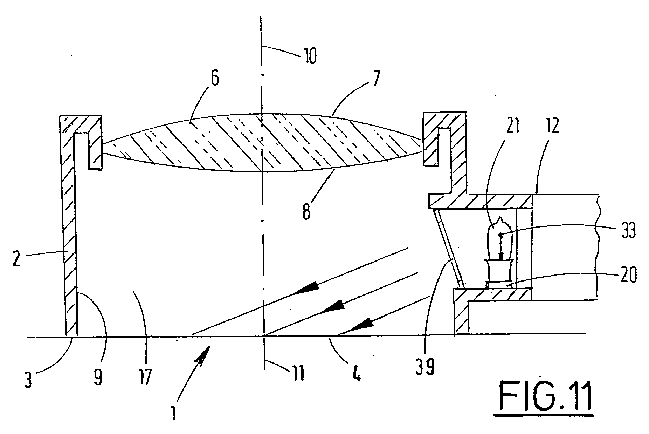

Bei der Ausführungsform gem. Fig. 11 wird der Leuchtbalken auf dem Lesegut dadurch erzeugt, daß vor der Glühlampe 21 eine Blende 39 angeordnet ist. Die Blendenöffnung (nicht dargestellt) ist nach Art eines Rechteckschlitzes ausgebildet. Die Breite des Rechteckschlitzes nimmt in Richtung auf das Lesegut zu, um die bereits weiter oben erwähnte Aufweitung des Leuchbalkens auszugleichen. Die Blende 39 kann, wie in Fig. 11 dargestellt zum Lesegut hin geneigt oder auch rechtwinklig dazu bzw. parallel zur optischen Achse 10 der Leselinse 6 angeordet sein.

## Patentansprüche

1. Lesegerät (1) mit wenigstens einer optischen Leselinse (6) zur Vergrößerung des Leseguts (4) und mit einer Markierung zur Hervorhebung oder Markierung wenigstens einer Zeile des Leseguts,
dadurch gekennzeichnet,
daß die Markierung ein auf dem Lesegut (4) erzeugter und einen Teilbereich des Sehfeldes ausleuchtender Leuchtbalken (15) ist.

2. Lesegerät nach Anspruch 1,
gekennzeichnet durch
ein in ihm enthaltenes Beleuchtungssystem mit einer Lichtquelle zur Erzeugung des Leuchtbalkens (15).

3. Lesegerät nach Anspruch 2,
dadurch gekennzeichnet
daß das Beleuchtungssystem durch eine in einem die Leselinse (6) selbst oder eine Leselinsenfassung tragenden Handgriff (12) angeordnete Batterie gespeist ist.

4. Lesegerät nach Anspruch 3,
dadurch gekennzeichnet,
daß die Leselinsenfassung Teil eines Hüllmantels (2) ist oder mit einem Hüllmantel verbunden ist,
- dessen unteres Ende eine Aufsetzkante (3) zum Aufstellen des Lesegerätes (1) auf dem Lesegut (4) ist und
- dessen Mittellängsachse (11) etwa parallel oder koaxial zur optischen Achse (10) der Leselinse (6) verläuft.

5. Lesegerät nach einem oder mehreren der vorgenannten Ansprüche,
dadurch gekennzeichnet,
daß die Leselinse (6) um eine rechtwinklig zu ihrer optischen Achse 10 verlaufenden Achse schwenkbar ist.

6. Lesegerät nach einem der Ansprüche 4 oder 5
dadurch gekennzeichnet,
daß der Hüllmantel ein Zylinder- oder Konusmantel ist oder die Querschnittsform eines Vieleckes, eines Rechteckes oder eines Quadrats aufweist.

7. Lesegerät nach einem oder mehreren der vorgenannten Ansprüche,
dadurch gekennzeichnet,
daß die Lichtquelle des Beleuchtungssystems in Lesestellung außerhalb des Sehfeldes der Leselinse (6) zwischen Leselinse und Lesegut (4) angeordnet ist.

8. Lesegerät nach Anspruch 7,
dadurch gekennzeichnet,
daß die Lichtquelle eine Glühlampe (21) ist, die in einem mit dem Innenraum (17) des Hüllmantels verbundenen Hohlraum (14) des Handgriffes (12) angeordnet ist.

9. Lesegerät nach Anspruch 8,
dadurch gekennzeichnet,
daß vor der Glühlampe (21) wenigstens eine sich außerhalb des Sehfeldes der Leselinse (6) befindliche Linse (19) zur Beeinflussung der von der Glühlampe (21) erzeugten Lichtstrahlen angeordnet ist.

10. Lesegerät nach Anspruch 9,
dadurch gekennzeichnet,
daß die Linse eine Sammellinse (19) ist und daß auf der der Linse diametral gegenüberliegenden Innenseite des Hüllmantels ein die aus der Sammellinse austretenden Lichtstrahlen auf das Lesegut ablenkender Umlenkspiegel (23) angeordnet ist.

11. Lesegerät nach Anspruch 10,
dadurch gekennzeichnet,
daß die Linse eine biasphärische Sammellinse ist.

12. Lesegerät nach Anspruch 10 oder 11,
dadurch gekennzeichnet,
daß die Glühwendel (33) bzw. der Glühfaden der Glühlampe (21) im Brennpunkt der Sammellinse (19) angeordnet ist.

13. Lesegerät nach Anspruch 12,
dadurch gekennzeichnet,
daß der Abstand zwischen Linse (19) und Glühlampe (21) variierbar ist.

14. Lesegerät nach einem oder mehreren der Ansprüche 10 bis 13,
dadurch gekennzeichnet,
daß zur Erzeugung eines Leuchtbalkens (15) auf dem Lesegut (4) die Spiegelfläche (24) des Umlenkspiegels (23) streifenförmig ausgebildet ist.

15. Lesegerät nach einem oder mehreren der Ansprüche 10 bis 13,
dadurch gekennzeichnet,
daß zur Erzeugung eines Leuchtbalkens (15) auf dem Lesegut (4) vor oder hinter der Sammellinse (19) eine Blende (31) mit schlitzförmiger Blendenöffnung angeordnet ist.

16. Lesegerät nach Anspruch 8,
dadurch gekennzeichnet,
daß die von der Glühlampe (21) ausgehenden Lichtstrahlen durch ein Linse (29) oder ein Prisma in Richtung auf das Lesegut ablenkbar sind.

17. Lesegerät nach Anspruch 16,
dadurch gekennzeichnet,
daß die Linse (29) eine Sammellinse und so angeordnet ist, daß ihre optische Achse (30) mit der Planebene des Leseguts (4) einen zur Glühlampe (21) hin offenen spitzen Winkel (β) bildet.

18. Lesegerät nach Anspruch 17,
dadurch gekennzeichnet,
daß die Linse (29) zwei parallel zueinander und parallel zu ihrer optischen Achse (30) verlaufende Seitenflächen (35) aufweist, deren Abstand (36) der Breite (26) des Leuchtbalkens (15) entspricht.

19. Lesegerät nach Anspruch 17,
dadurch gekennzeichnet,
daß zur Erzeugung des Leuchtbalkens (15) vor der Linse (29) eine Blende (31) mit schlitzförmiger Blendenöffnung angeordnet ist, wobei die Breite des Schlitzes etwa der Breite des Leuchtbalkens (15) entspricht.

20. Lesegerät nach einem oder mehreren der Ansprüche 4 - 19,
dadurch gekennzeichnet,
daß die Innenfläche des Hüllmantels (2) eine das Licht reflektierende Färbung oder Beschichtung aufweist.

21. Lesegerät nach einem oder mehreren der Ansprüche 9 bis 20,
dadurch gekennzeichnet,
daß die Linsen (19,29) gefärbt sind oder vor bzw. hinter ihnen ein Farbfilter (40) angeordnet ist.

22. Lesegerät nach Anspruche 8,
dadurch gekennzeichnet,
daß vor der Glühlampe (21) eine sich außerhalb des Sehfeldes der Leselinse (6) befindliche Blende mit schlitzförmiger Öffnung zur Erzeugung des Leuchtbalkens auf dem Lesegut (4) angeordnet ist.

## Claims

1. Reading device (1) having at least one optical reading lens (6) for magnifying the reading material (4) and having a marking for emphasizing or marking at least one line of the reading material, characterized in that the marking is a luminous bar (15) produced on the reading material (4) and illuminating a subarea of the field of view.

2. Reading device according to Claim 1, characterized by an illuminating system contained in it, having a light source for producing the luminous bar (15).

3. Reading device according to Claim 2, characterized in that the illumination system is powered by a battery arranged in a handle (12) bearing the reading lens (6) itself or a reading-lens mount.

4. Reading device according to Claim 3, characterized in that the reading-lens mount is part of a shroud (2) or is connected to a shroud,
- the lower end of which is a setting-down edge (3) for placing the reading device (1) on the reading material (4) and
- the centre longitudinal axis (11) of which runs approximately parallel or coaxially with respect to the optical axis (10) of the reading lens (6).

5. Reading device according to one or more of the preceding claims, characterized in that the reading lens (6) is pivotable about an axis running at right angles with respect to its optical axis (10).

6. Reading device according to either of Claims 4 and 5, characterized in that the shroud is a cylindrical or conical casing or has the cross-sectional shape of a polygon, a rectangle, or a square.

7. Reading device according to one or more of the preceding claims, characterized in that, in the reading position, the light source of the illumination system is arranged outside the field of view of the reading lens (6) between the reading lens and the reading material (4).

8. Reading device according to Claim 7, characterized in that the light source is an incandescent lamp (21), which is arranged in a cavity (14) of the handle (12) connected to the interior (17) of the shroud.

9. Reading device according to Claim 8, characterized in that in front of the incandescent lamp (21) there is arranged at least one lens (19) located outside the field of view of the reading lens (6) for influencing the rays of light produced by the incandescent lamp (21).

10. Reading device according to Claim 9, characterized in that the lens is a convergent lens (19); and in that on the inner side of the shroud lying diametrically opposite the lens there is arranged a deflecting mirror (23) diverting rays of light emerging from the convergent lens onto the reading material.

11. Reading device according to Claim 10, characterized in that the lens is a biaspherical convergent lens.

12. Reading device according to Claim 10 or 11, characterized in that the incandescent spiral (33) or the incandescent filament of the incandescent lamp (21) is arranged at the focal point of the convergent lens (19).

13. Reading device according to Claim 12, characterized in that the distance between the lens (19) and the incandescent lamp (21) is variable.

14. Reading device according to one or more of Claims 10 to 13, characterized in that, for producing a luminous beam (15) on the reading material (4), the reflective surface (24) of the deflecting mirror (23) is designed in strip form.

15. Reading device according to one or more of Claims 10 to 13, characterized in that, for producing a luminous bar (15) on the reading material (5), a diaphragm (31) with a slit-shaped diaphragm aperture is arranged in front of or behind the convergent lens (19).

16. Reading device according to Claim 8, characterized in that the rays of light emerging from the incandescent lamp (21) can be diverted by a lens (29) or a prism in the direction of the reading material.

17. Reading device according to Claim 16, characterized in that the lens (29) is a convergent lens and is arranged such that its optical axis (30) forms with the plane of the reading material (4) an acute angle (β) which is open towards the incandescent lamp (21).

18. Reading device according to Claim 17, characterized in that the lens (29) has two side surfaces (35) which run parallel with respect to each other and parallel with respect to its optical axis (30) and the distance (36) between which corresponds to the width (26) of the luminous bar (15).

19. Reading device according to Claim 17, characterized in that for producing the luminous bar (15) a diaphragm (31) with a slit-shaped diaphragm aperture is arranged in front of the lens (29), the width of the slit corresponding approximately to the width of the luminous bar (15).

20. Reading device according to one or more of Claims 4-19, characterized in that the inner surface of the shroud (2) has a coloration or coating reflecting the light.

21. Reading device according to one or more of Claims 9 to 20, characterized in that the lenses (19, 29) are coloured or a colour filter (40) is arranged in front of or behind them.

22. Reading device according to Claim 8, characterized in that a diaphragm with a slit-shaped aperture, located outside the field of vision of the reading lens (6), is arranged in front of the incandescent lamp (21) for producing the luminous bar on the reading material (4).

## Revendications

1. Dispositif de lecture (1) comprenant au moins une lentille de lecture (6) optique, pour le grossissement de l'article à lire (4), et comportant un marquage pour faire ressortir ou repérer au moins une ligne de l'article à lire,
caractérisé en ce,
que le marquage est une barre lumineuse (15), engendrée sur l'article à lire (4) et illuminant une région partielle du champ visuel.

2. Dispositif de lecture selon la revendication 1,
caractérisé par
un système d'éclairage contenu en lui, comprenant une source de lumière, pour l'engendrement de la barre lumineuse (15).

3. Dispositif de lecture selon la revendication 2,
caractérisé en ce
que le système d'éclairage est alimenté par une batterie agencée dans une poignée (12) portant la lentille de lecture (6) même ou une monture de lentille de lecture.

4. Dispositif de lecture selon la revendication 3,
caractérisé en ce
que la monture de lentille de lecture fait partie d'une enveloppe de gainage (2) ou est reliée avec une enveloppe de gainage,
- dont l'extrémité inférieure est une arête de pose (3) pour la mise en place du dispositif de lecture (1) sur l'article à lire (4),et
- dont l'axe longitudinal médian (11) s'étend à peu près parallèle ou coaxial à l'axe (10) optique de la lentille de lecture (6).

5. Dispositif de lecture selon une ou plusieurs des revendications préénoncées,
caractérisé en ce,
que la lentille de lecture (6) est susceptible d'être pivotée autour d'un axe s'étendant à angle droit par rapport à son axe (10) optique.

6. Dispositif de lecture selon une des revendications 4 ou 5,
caractérisé en ce,
que l'enveloppe de gainage est une enveloppe cylindrique ou une enveloppe conique, ou que la forme de coupe transversale présente un polygone, un rectangle ou un carré.

7. Dispositif de lecture selon une ou plusieurs des revendications préénoncées,
caractérisé en ce,
que la source de lumière du système d'éclairage, en position de lecture, est agencée à l'extérieur du champ visuel de la lentille de lecture (6), entre lentille de lecture (6) et article à lire (4).

8. Dispositif de lecture selon la revendication 7,
caractérisé en ce,
que la source de lumière est une lampe à incandescence (21), qui est agencée dans un espace creux (14) de la poignée (12) relié avec l'espace intérieur (17) de l'enveloppe de gainage.

9. Dispositif de lecture selon la revendication 8,
caractérisé en ce,
que devant la lampe à incandescence (21), est agencée au moins une lentille (19) se trouvant à l'extérieur du champ visuel de la lentille de lecture (6), pour l'influencement des rayons de lumière engendrés par la lampe à incandescence (21).

10. Dispositif de lecture selon la revendication 9,
caractérisé en ce,
que la lentille est une lentille convergente (19) et que sur la lentille, au côté intérieur de l'enveloppe de gainage se trouvant diamétralement à l'opposé de la lentille, est agencé un miroir de renvoi (23) déviant sur l'article à lire les rayons de lumière sortant de la lentille convergente.

11. Dispositif de lecture selon la revendication 10,
caractérisé en ce,
que la lentille est une lentille convergente bi-asphérique.

12. Dispositif de lecture selon la revendication 10 ou la revendication 11,
caractérisé en ce,
que l'enroulement hélicoïdal incandescent (33), ou bien le filament incandescent de la lampe à incandescence (21), sont agencés dans le foyer de la lentille convergente (19).

13. Dispositif de lecture selon la revendication 12,
caractérisé en ce,
que l'espacement entre lentille (19) et lampe à incandescence (21) est susceptible d'être amené à varier.

14. Dispositif de lecture selon une ou plusieurs des revendications 10 à 13,
caractérisé en ce,
que pour l'engendrement d'une barre lumineuse (15) sur l'article à lire (4), la surface de miroir (24) du miroir de renvoi (23) est constituée sous forme de bande.

15. Dispositif de lecture selon une ou plusieurs des revendications 10 à 13,
caractérisé en ce,
que pour l'engendrement d'une barre lumineuse (15) sur l'article à lire (4), devant ou derrière la lentille convergente (19), un diaphragme (31) avec ouverture de diaphragme en forme de fente est agencé.

16. Dispositif de lecture selon la revendication 8,
caractérisé en ce,
que les rayons de lumière sortant de la lampe à incandescence (21) sont susceptibles d'être déviés en direction, sur l'article à lire, par une lentille (29) ou un prisme.

17. Dispositif de lecture selon la revendication 16,
caractérisé en ce,
que la lentille (29) est une lentille convergente, et est ainsi agencée, que son axe (30) optique forme avec le plan plat de l'article à lire (4) un angle au sommet (β) ouvert en direction de la lampe à incandescence (21).

18. Dispositif de lecture selon la revendication 17,
caractérisé en ce,
que la lentille (29) présente deux surfaces latérales (35) s'étendant parallèles l'une à l'autre et parallèles à son axe (30) optique, dont l'espacement (36) correspond à la largeur (26) de la barre lumineuse (15).

19. Dispositif de lecture selon la revendication 17,
caractérisé en ce,
que pour l'engendrement de la barre lumineuse (15), devant la lentille (29), un diaphragme (31) avec ouverture de diaphragme en forme de fente est agencé, la largeur de la fente correspondant à peu près à la largeur de la barre lumineuse (15).

20. Dispositif de lecture selon une ou plusieurs des revendications 4 à 19,
caractérisé en ce,
que la surface intérieure de l'enveloppe de gainage (2) présente une coloration ou une enduction réfléchissant la lumière.

21. Dispositif de lecture selon une ou plusieurs des revendications 9 à 20,
caractérisé en ce,
que les lentilles (19, 29) sont colorées, ou qu'un filtre chromatique (40) est agencé devant ou bien derrière elles.

22. Dispositif de lecture selon la revendication 8,
caractérisé en ce,
que devant la lampe à incandescence (21), est agencé un diaphragme avec ouverture en forme de fente se trouvant à l'extérieur du champ visuel de la lentille de lecture (6), pour l'engendrement de la barre lumineuse sur l'article à lire (4).
